# FASCICULE DE BREVET EUROPEEN

(11) **EP 4 496 732 B1**
(45) Date de publication et mention de la délivrance du brevet: **27.05.2026**
(21) Numéro de dépôt: 23712256.9
(22) Date de dépôt: 20.03.2023
(51) Int. Cl.: B60R 19/28, B60R 19/34, B60R 19/12, B62D 21/15

(54) **ENSEMBLE DE STRUCTURE AVANT DE VÉHICULE AUTOMOBILE**
FRONTSTRUKTURANORDNUNG FÜR EIN KRAFTFAHRZEUG
FRONT STRUCTURE ASSEMBLY FOR A MOTOR VEHICLE

(30) Priorité: 23.03.2022 FR 2202573
(43) Date de publication de la demande: 29.01.2025
(73) Titulaire: Renault s.a.s, 92100 Boulogne Billancourt (FR)
(72) Inventeur: ALGANS, Thomas, 78280 Guyancourt (FR); DUBE, Emmanuel, 72086 Le Mans cedex 9 (FR); PENSEC, Yannick, 78280 Guyancourt (FR)
(86) Numéro de dépôt international: PCT/EP2023/057019
(87) Numéro de publication internationale: WO 2023/180233

(56) Documents cités:
- EP-A1- 2 915 703
- WO-A1-2016/156685
- FR-A1- 3 009 255

## Description

La présente invention se rapporte à un ensemble de structure avant d'un véhicule automobile permettant de garantir sa déformation contrôlée lors des chocs.

Cette déformation vise à absorber le maximum d'énergie lors des chocs de manière à préserver les matériels et les personnes impliqués.

Les véhicules automobiles connus comprennent usuellement un habitacle et un compartiment moteur situé à l'avant du véhicule et délimité de l'habitacle par un tablier.

Ils comprennent également deux longerons sensiblement parallèles qui s'étendent longitudinalement à distance l'un de l'autre à travers le tablier et dans le compartiment moteur.

Sensiblement à l'aplomb du tablier, le véhicule comprend un berceau qui s'étend transversalement et duquel viennent s'étendre deux prolonges sous le compartiment moteur. Ces deux prolonges s'étendent elles-mêmes sensiblement à l'aplomb des deux longerons et elles y sont généralement suspendues au moyen d'un organe de suspension.

Les prolonges sont respectivement prolongées par des absorbeurs de chocs communément appelés *«crash-box* ».

Aussi, le véhicule automobile comprend une face avant technique laquelle inclut notamment le radiateur du véhicule. Et cette face avant technique s'étend sensiblement au droit des absorbeurs de chocs.

Partant, la compression de l'avant du véhicule automobile en cas de choc, s'opère par la déformation contrôlée d'éléments situés en arrière et en avant la face avant technique du véhicule, une partie en voie haute dans le prolongement des deux longerons et une partie en voie basse par le biais des absorbeurs de chocs.

Le document FR3009255A1 divulgue un ensemble de structure avant de véhicule automobile d'après le préambule de la revendication 1.

Toutefois, la longueur de la partie avant des véhicules automobiles tend à être réduite et l'espace requis pour la mise en oeuvre d'éléments déformables adaptés à absorber les chocs diminue d'autant.

Aussi, un problème qui se pose et que vise à résoudre la présente invention est de mettre en oeuvre un ensemble de structure avant de véhicule automobile plus court, mais dont les qualités d'absorption des chocs sont conservées.

Dans ce but, il est proposé un ensemble de structure avant d'un véhicule automobile comprenant : un tablier séparant un habitacle d'un compartiment moteur et deux longerons avant supérieurs s'étendant parallèlement à distance l'un de l'autre depuis ledit tablier et à travers ledit compartiment moteur dans un sens opposé audit tablier ; un berceau s'étendant transversalement sensiblement à l'aplomb dudit tablier ; deux prolonges s'étendant respectivement à l'aplomb desdits deux longerons depuis ledit berceau jusqu'à une extrémité de liaison, chacune desdites prolonges comprenant, d'une part une partie arrière rigide reliée audit berceau et une partie avant déformable s'étendant jusqu'à ladite extrémité de liaison, et d'autre part au moins un point d'ancrage situé à distance dudit berceau, lesdites deux prolonges étant respectivement suspendues auxdits longerons avant par deux organes de suspension, chaque organe de suspension étant relié audit au moins un point d'ancrage. Ledit au moins un point d'ancrage est situé sur ladite extrémité de liaison desdites prolonges.

Ainsi, une caractéristique de l'invention réside dans la suppression des absorbeurs de chocs traditionnels, et dans la mise en œuvre de prolonges qui intègrent précisément la fonction d'absorbeurs de chocs. De la sorte, on vient reculer dans le compartiment moteur les éléments déformables sans pour autant nuire à cette déformation contrôlée en cas de choc. En conséquence, on peut raccourcir la structure avant des véhicules automobiles sans pour autant nuire à la sécurité en cas de choc. De surcroît, précisément après un choc, la réparabilité de la structure avant est accrue, puisqu'on opère alors le remplacement complet de la prolonge.

Selon l'invention, lesdites parties arrière rigide et avant déformable sont de forme sensiblement conique. Comme on l'expliquera plus en détail dans la suite de la description, la mise en œuvre d'éléments coniques permet un meilleur contrôle de la déformation selon la direction axiale de ces éléments.

Préférentiellement, lesdites parties, arrière rigide et avant déformable présentant respectivement une base et un sommet, et elles sont réunies ensemble par leur base. Autrement dit, le berceau accueille le sommet de la partie arrière rigide des prolonges, tandis que le sommet de la partie avant déformable accueille le point d'ancrage des organes de suspension, également dénommés pendeloques, car faisant partie de la face avant technique du véhicule ou situé au voisinage. Ainsi, la plus petite section de la partie arrière de prolonge est reliée au berceau et la plus petite section de partie avant reçoit ledit au moins un point d'ancrage, tandis que les plus grosses sections des deux parties sont reliées ensemble. Par exemple, on prévoit deux ou trois points d'ancrage, reliés à la pendeloque.

En outre, et selon un mode de réalisation de l'invention particulièrement avantageux, lesdites parties arrière rigide et avant déformable sont réunies ensemble par l'intermédiaire d'une plaque annulaire étendue entre leurs bases.

Comme on l'expliquera plus en détail ci-après, lesdites parties arrière rigide et avant déformable sont métalliques et elles sont alors soudées respectivement sur les deux faces opposées de la plaque annulaire. Aussi, les deux parties arrière et avant, s'étendent sensiblement coaxialement. De la sorte, la plaque annulaire vient stopper les contraintes de déformation qui se propagent dans la partie avant déformable des prolonges.

De surcroît, la plaque annulaire permet d'éviter de transférer des efforts de rotation que subit la partie avant dans certains cas de choc, vers la partie arrière.

Selon un mode de mise en œuvre de l'invention privilégié, mais nullement limitatif, lesdites parties arrière rigide et avant déformable sont de section rectangulaire. De la sorte, on obtient une meilleure résistance en torsion des prolonges.

Aussi, lesdites parties arrière rigide et avant déformable sont creuses. En conséquence, les prolonges offrent une résistance mécanique importante comparée à la masse de métal mise en œuvre.

De plus, et selon un mode de réalisation préféré, lesdites parties arrière rigide et avant déformable sont réalisées par emboutissage de tôle refermée sur elle-même. Les deux bordures libres opposées de tôle sont ainsi, après emboutissage, soudées l'une contre l'autre pour former les parties avant tout comme les parties arrière de prolonge.

Par ailleurs, et de façon particulièrement avantageuse, on prévoit de réaliser la partie avant déformable avec une tôle moins épaisse que la partie arrière rigide. De la sorte, la déformation de la partie avant est favorisée en cas de choc.

En outre, la partie avant déformable présente une pluralité d'ajours. Grâce à ces ajours, on crée des zones privilégiées de déformation. Par exemple, on réalise des ajours de proche en proche dans les quatre arêtes de la partie avant de prolonge. De la sorte, on crée des lignes privilégiées de déformation selon une composante longitudinale permettant de comprimer ladite partie avant, par exemple en S et/ou en accordéon.

Aussi, les extrémités de liaison desdites prolonges son reliées ensemble par une traverse avant. De la sorte, en cas de choc, la traverse avant permet de répartir les efforts de déformation sur les deux parties avant déformables de prolonge.

En outre, la partie arrière rigide de chacune desdites prolonges est reliée audit berceau de manière amovible. Conséquemment, en cas de choc et d'atteinte de la partie avant déformable, la prolonge peut être remplacée aisément.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique partielle en perspective de trois quarts avant en écorché d'un ensemble de structure avant de véhicule automobile selon l'invention ;
[Fig. 2] est une vue schématique de côté montrant un élément de détail illustré sur la [Fig. 1];
[Fig. 3] est une vue schématique en perspective de l'élément de détail représenté sur la [Fig. 2];
[Fig. 4] est une vue schématique partielle en perspective éclatée de détail de la [Fig. 1];
[Fig. 5A] est une vue schématique en perspective de l'élément de détail tel que représenté sur la [Fig. 2] dans un premier état ; et,
[Fig. 5B] est une vue schématique en perspective de l'élément de détail tel que représenté sur la [Fig. 5A] dans un second état.

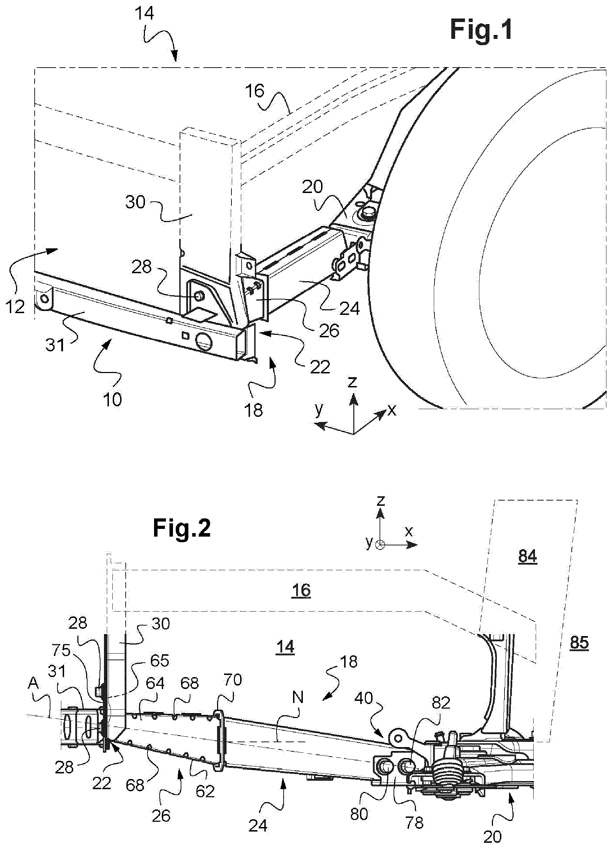

La [Fig. 1] montre, vu de trois quarts avant droit et partiellement, un ensemble de structure avant 10 de véhicule automobile conforme à l'invention.

On retrouve le trièdre x,y,z indiquant respectivement, une première direction longitudinale, de l'avant vers l'arrière du véhicule, une deuxième direction, transversale, s'étendant de la gauche vers la droite du véhicule en situation de roulage, et une troisième direction, verticale, ascendante.

La [Fig. 1] montre une face avant 12 et en arrière un compartiment moteur 14. Aussi, elle montre partiellement un longeron avant supérieur gauche 16 qui s'étend suivant la direction longitudinale du véhicule automobile. Et à l'aplomb du longeron avant supérieur gauche 16, s'étend une prolonge gauche 18 selon la direction longitudinale x du véhicule. Elle s'étend depuis un berceau 20, jusqu'à une extrémité de liaison 22. Le berceau s'étend transversalement selon la direction y du véhicule comme on l'expliquera ci-après.

La prolonge gauche 18 présente une partie arrière rigide 24, reliée au berceau 20 et dans le prolongement, une partie avant déformable 26 s'étendant jusqu'à l'extrémité de liaison 22. Aussi, la partie avant déformable 26 présente au moins un point d'ancrage 28 situé sur l'extrémité de liaison 22 et que l'on va décrire plus en détail ci-après.

En outre, une pendeloque 30 de face avant technique sous forme de plaque, s'étendant selon la troisième direction verticale, relie l'extrémité de liaison 22 de la partie avant déformable 26 au longeron avant supérieur gauche 16 par l'intermédiaire du point d'ancrage 28. De la sorte, la prolonge gauche 18 est suspendue au longeron avant supérieur gauche 16 par l'intermédiaire de la pendeloque 30.

On observera que la plaque dans laquelle est réalisée la pendeloque 30, présente deux bordures libres latérales pliées en retour pour augmenter sa résistance à la déformation.

On retrouve les mêmes éléments de manière symétrique du côté droit du véhicule. Aussi, les deux extrémités de liaison, gauche 22 et droite, sont reliées ensemble par une traverse avant 31, représentée partiellement ici.

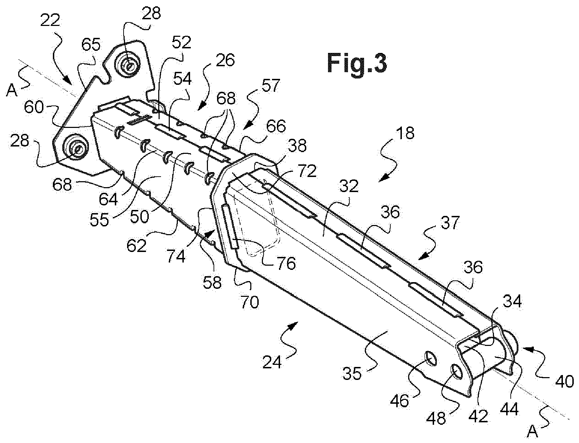

On se référera à présent à la [Fig. 3] afin de décrire en détail la prolonge gauche 18. On observera qu'elle est identique à la prolonge droite non représentée.

On retrouve sur cette [Fig. 3] la partie arrière rigide 24 et dans son prolongement, la partie avant déformable 26. Les deux parties 24, 26 sont creuses et sont sensiblement de forme conique à base rectangulaire.

Aussi, la partie arrière rigide 24 est réalisée à partir d'une plaque métallique, par exemple en acier, d'une épaisseur comprise par exemple entre 1,5 mm et 2,5 mm. Avantageusement, l'épaisseur de la plaque métallique est de 2 mm. Et elle est emboutie et pliée pour pouvoir être refermée sur elle-même de façon à former en volume la partie arrière 24.

Aussi, la plaque métallique présente deux bordures libres opposées 32, 34 qui viennent se chevaucher sur le dessus pour pouvoir être soudées ensemble au moyen de premiers cordons de soudure 36.

Selon une autre variante de réalisation, non représentée, les deux bordures libres opposées sont ajustées bord à bord et elles sont reliées entre elles par un seul cordon de soudure continu.

Selon encore une autre variante de réalisation, non représentée, la partie arrière rigide est réalisée à partir de deux demi-parties longitudinales en U. Chacune des demi-parties longitudinales présente deux bords opposés et les deux demi-parties sont ajustées l'une contre l'autre respectivement bord à bord. Et elles sont alors reliées ensemble par des cordons de soudure ménagés à cheval sur les deux bords opposés situés respectivement sur les deux faces opposées de l'assemblage ainsi réalisé.

La partie arrière 24 présente ainsi deux parois latérales opposées 35, 37.

Aussi, la partie arrière 24 présente une première base 38, opposée à un premier sommet 40. A travers le sommet 40, sont engagés deux organes cylindriques transversaux 42, 44. Ces organes cylindriques transversaux traversent l'une 37 des deux parois latérales 35, 37 et sont soudés contre l'intérieur de l'autre 35 paroi transversale, respectivement au droit de deux orifices espacés l'un de l'autre 46, 48. Ces deux organes cylindriques transversaux 42, 44 permettent de relier le sommet 40 au berceau 20 comme on l'expliquera ci-après.

La partie avant déformable 26, est, de la même façon que la partie arrière 24 représentée sur la [Fig. 3], réalisée à partir d'une plaque métallique, d'une épaisseur sensiblement plus faible comprise par exemple entre 0,8 mm et 1,6 mm. Préférentiellement, l'épaisseur de la plaque métallique est de 1,2 mm.

De la même façon, elle est emboutie et pliée de façon à former la partie avant 26. Aussi, la plaque présente deux secondes bordures libres opposées 50, 52 qui se chevauchent sur le dessus pour être soudées ensemble au moyen de seconds cordons de soudure 54. La partie avant 26 est de section rectangulaire et elle présente également deux secondes parois latérales opposées 55, 57.

Selon un autre mode de réalisation de l'invention non représenté, les deux secondes bordures libres opposées de la partie avant déformable sont ajustées bord à bord et elles sont reliées entre elles par un seul cordon de soudure continu de façon analogue à la première variante de réalisation de la partie arrière rigide. Selon encore un autre mode de réalisation, la partie avant déformable est réalisée de manière analogue à la partie arrière rigide selon ladite autre variante de réalisation. On observera que l'épaisseur relative des plaques métalliques utilisées pour la partie avant déformable 26 et pour la partie arrière rigide 24, peut être ajustée en fonction de la résistance mécanique souhaitée de ces différents éléments.

La partie avant déformable 26 présente une seconde base 58, opposée à un second sommet 60 et quatre arêtes longitudinales dont trois 62, 64, 66 apparaissent sur la [Fig. 3], la dernière étant masquée. Le second sommet 60 forme ainsi l'extrémité de liaison de la prolonge gauche 18. Aussi, le second sommet 60 est relié par soudure à une platine d'ancrage 65 s'étendant sensiblement perpendiculairement à la partie avant 26. La platine d'ancrage 65 présente ainsi au moins un point d'ancrage 28 et en l'espèce au moins deux, et par exemple trois. Et on expliquera ci-après plus en détail son mode de liaison à la pendeloque 30 et à la traverse avant 31.

Aussi, chacune des arêtes 62, 64, 66 présente une pluralité d'entailles 68 régulièrement espacées les unes des autres et formant des ajours à travers la partie avant 26 de prolonge. Ces ajours visent à amoindrir la résistance mécanique de la partie avant 26 et à privilégier sa cinématique de déformation comme on l'expliquera ci-après.

En outre, les deux parties 24, 26 sont réunies ensemble par leurs bases 38, 58 au moyen d'une plaque annulaire 70 intermédiaire.

La plaque annulaire 70, ou pièce de liaison, est réalisée en métal elle présente une épaisseur, comprise par exemple entre 2,5 mm et 3,5 mm. Selon un mode de mise en œuvre particulièrement avantageux, elle présente une épaisseur de 3 mm.

Aussi, elle présente une largeur et une longueur supérieures à la largeur et à la longueur des deux bases 38, 58 des parties arrières 24 et avant 26. Et elle définit une lumière centrale dont la longueur et la largeur sont inférieures à la longueur et à la largeur des deux bases 38, 58. Elle présente également deux faces opposées 72, 74 contre lesquelles sont respectivement appliquées les deux bases 38, 58 des parties arrière 24 et avant 26.

Les parties arrière 24 et avant 26 et la plaque annulaire 70 sont alors soudées ensemble en réalisant des troisièmes cordons de soudure 76 à la jointure entre les deux. Ainsi, les deux parties arrière 24 et avant 26 s'étendent selon deux directions moyennes coaxiales confondues avec un axe longitudinal A de la prolonge 18.

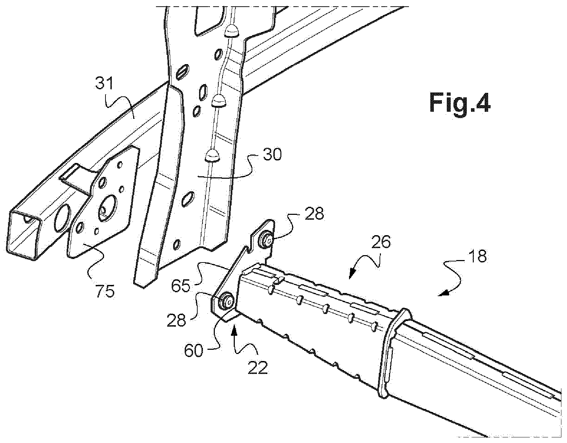

On se référera à présent à la [Fig. 4] sur laquelle on retrouve, d'une part la prolonge gauche 18 et sa partie avant déformable 26 assortie de sa platine d'ancrage 65 au second sommet 60, et d'autre part, la traverse avant 31 et la pendeloque 30.

La traverse 31 est équipée sur sa face interne, d'une contre-plaque 75 dont la forme correspond sensiblement à la forme de la platine d'ancrage 65 reflétée dans un miroir. Ainsi, la pendeloque 30 est adaptée à venir s'étendre entre la platine d'ancrage 65 et la contre-plaque 75 et à y être prise en sandwich. Des vis de fixation sont alors adaptées à être installées à travers la platine 65, la pendeloque 30 et la contre-plaque 75, pour former les points d'ancrage 28 et afin de les relier ensemble. On retrouve sur la [Fig. 2] la prolonge gauche 18 constituée de ses parties arrière 24 et avant 26 reliées ensemble par la plaque annulaire 70. Aussi, on retrouve sur cette figure le berceau 20, lequel présente un organe de fixation en U 78 recevant le premier sommet 40 de la partie arrière 24 de la prolonge 18. Le premier sommet 40 vient ainsi en prise entre les deux ailes opposées de l'organe de fixation en U 78, tandis que deux vis de fixation 80, 82 traversent lesdites deux ailes opposées et le premier sommet 40 à travers les deux orifices 46, 48 de ladite autre paroi latérale 35 et les organes cylindriques transversaux 42, 44 représentés sur la [Fig. 3]. De la sorte, le premier sommet 40 est relié de manière rigide au berceau 20.

De surcroît, on retrouve en traits interrompus, et schématiquement, le longeron avant supérieur gauche 16 s'étendant à travers le compartiment moteur 14, depuis un tablier 84 situé au droit du berceau 20, et selon la direction longitudinale du véhicule automobile. Le tablier 84 sépare le compartiment moteur 14 d'un habitacle 85.

On retrouve également la pendeloque 30 reliant ensemble l'extrémité de liaison 22 de la partie avant déformable 26 et le longeron avant supérieur gauche 16. On observera que la platine d'ancrage 65 et la contre-plaque 75 viennent prendre en sandwich la pendeloque 30. L'ensemble étant maintenu par l'intermédiaire des points d'ancrage 28.

Bien évidemment, on retrouve de manière symétrique par rapport à un plan médian parallèle au plan défini par les directions x et z les mêmes éléments dans la partie droite de la structure, c'est-à-dire un longeron avant supérieur droit s'étendant à travers le compartiment moteur depuis le tablier et la pendeloque 30 reliant ensemble la prolonge droite et le longeron avant supérieur droit.

On observera que le plan défini par la plaque annulaire 70 présente une normale N sensiblement parallèle à la direction longitudinale x et que l'axe longitudinal A de la prolonge 18 est incliné par rapport à la normale N selon une composante négative de la troisième direction z.

Ainsi, on retrouve la partie avant déformable 26 présentant ses entailles 68 régulièrement espacées les unes des autres le long de ses arêtes 62, 64 et formant ajours.

Partant, on comprend que la partie avant déformable 26 de la prolonge 18, qui s'étend sensiblement sur une distance égale au tiers de la longueur de la prolonge 18, joue le rôle d'absorbeur de chocs, lors d'un choc avant.

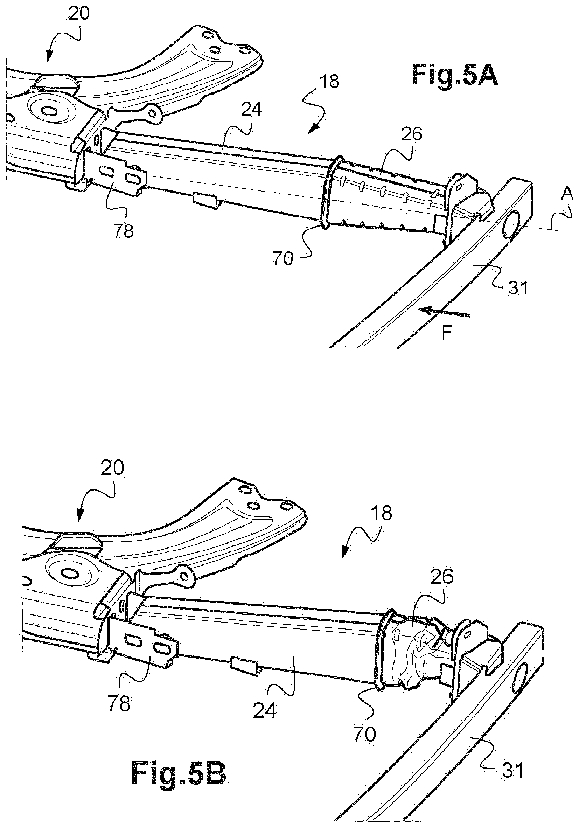

On retrouve sur la [Fig. 5A] suivant un autre angle, la prolonge 18 reliée au berceau 20 par l'intermédiaire de l'organe de fixation en U 78.

Ainsi, lorsque le véhicule en mouvement rencontre un obstacle venant percuter la traverse avant 31 selon la flèche F, la partie avant déformable 26 se déforme alors de matière contrôlée sensiblement en accordéon, selon la direction longitudinale A. On retrouve sur la [Fig. 5B] la partie avant déformable 26 ainsi comprimée axialement.

Grâce à la plaque annulaire 70, seule la partie avant 26 se déforme. La plaque annulaire 70 vient bloquer dans une certaine mesure cette déformation qui ne se transmet pas dans la partie arrière 24.

En outre, la partie arrière 24 est par nature plus rigide de part l'épaisseur de la tôle qui la constitue et de l'absence d'ajours contrairement à la partie avant 26.

De plus, la plaque annulaire 70 offre un appui stable qui évite également la transmission des efforts de torsion dans la partie arrière 24 de la prolonge 18.

Ainsi, en conservant l'intégrité de la partie arrière 24, on préserve dans une certaine mesure des éléments du compartiment moteur et les passagers du véhicule. Toutefois, grâce au mode de fixation de la partie arrière 24 de la prolonge 18 sur le berceau 20, il est aisé de la remplacer lorsqu'elle est endommagée.

## Revendications

1. Ensemble de structure avant (10) d'un véhicule automobile comprenant :
- un tablier (84) séparant un habitacle (85) d'un compartiment moteur (14) et deux longerons (16) avant supérieurs s'étendant parallèlement à distance l'un de l'autre depuis ledit tablier (84) et à travers ledit compartiment moteur (14) dans un sens opposé audit tablier ;
- un berceau (20) s'étendant transversalement sensiblement à l'aplomb dudit tablier (84) ;
- deux prolonges (18) s'étendant respectivement à l'aplomb desdits deux longerons (16) depuis ledit berceau (20) jusqu'à une extrémité de liaison (22), chacune desdites prolonges comprenant, d'une part une partie arrière rigide (24) reliée audit berceau (20) et une partie avant déformable (26) s'étendant jusqu'à ladite extrémité de liaison (22), et d'autre part au moins un point d'ancrage (28) situé à distance dudit berceau, lesdites deux prolonges (18) étant respectivement suspendues auxdits longerons avant (16) par deux organes de suspension (30), chaque organe de suspension (30) étant relié audit au moins un point d'ancrage (28) ;
ledit au moins un point d'ancrage (28) est situé sur ladite extrémité de liaison (22) de chacune desdites prolonges (18) ;
**caractérisé en ce que** lesdites parties, arrière rigide (24) et avant déformable (26) sont de forme conique.

2. Ensemble de structure selon la revendication 1, **caractérisé en ce que** lesdites parties arrière rigide (24) et avant déformable (26) présentent respectivement une base (38 ; 58) et un sommet (40 ; 60), et **en ce qu'**elles sont réunies ensemble par leur base (38, 58).

3. Ensemble de structure selon la revendication 2, **caractérisé en ce que** lesdites parties arrière rigide (24) et avant déformable (26) sont réunies ensemble par l'intermédiaire d'une plaque annulaire (70) étendue entre leurs bases.

4. Ensemble de structure selon l'une quelconque des revendications 1 à 3, **caractérisé en ce que** lesdites parties arrière rigide (24) et avant déformable (26) sont de section rectangulaire.

5. Ensemble de structure selon l'une quelconque des revendications 1 à 4, **caractérisé en ce que** lesdites parties arrière rigide (24) et avant déformable (26) sont creuses.

6. Ensemble de structure selon la revendication 5, **caractérisé en ce que** lesdites parties arrière rigide (24) et avant déformable (26) sont réalisées par emboutissage de tôles refermées sur elles-mêmes.

7. Ensemble de structure selon la revendication 5 ou 6, **caractérisé en ce que** ladite partie avant déformable (26) présente une pluralité d'ajours (68).

8. Ensemble de structure selon l'une quelconque des revendications 1 à 7, **caractérisé en ce que** les extrémités de liaison (22) desdites prolonges (18) sont reliées ensemble par une traverse avant (31).

9. Ensemble de structure selon l'une quelconque des revendications 1 à 8, **caractérisé en ce que** ladite partie arrière rigide (24) de chacune desdites prolonges (18) est reliée audit berceau (20) de manière amovible.

## Patentansprüche

1. Frontstrukturanordnung (10) eines Kraftfahrzeugs, welche umfasst:
- eine Spritzwand (84), die einen Innenraum (85) von einem Motorraum (14) trennt, und zwei obere vordere Längsträger (16), die sich parallel in einem Abstand voneinander von der Spritzwand (84) und durch den Motorraum (14) hindurch in einer zu der Spritzwand entgegengesetzten Richtung erstrecken;
- einen Hilfsrahmen (20), der sich quer im Wesentlichen senkrecht unter der Spritzwand (84) erstreckt;
- zwei Verlängerungen (18), die sich jeweils senkrecht unter einem der zwei Längsträger (16) vom Hilfsrahmen (20) aus bis zu einem Verbindungsende (22) erstrecken, wobei jede dieser Verlängerungen einerseits einen mit dem Hilfsrahmen (20) verbundenen starren hinteren Teil (24) und einen sich bis zu dem Verbindungsende (22) erstreckenden verformbaren vorderen Teil (26) umfasst, und andererseits mindestens einen Verankerungspunkt (28), der sich in einem Abstand von dem Hilfsrahmen befindet, wobei die zwei Verlängerungen (18) jeweils an den vorderen Längsträgern (16) durch zwei Aufhängungsorgane (30) aufgehängt sind, wobei jedes Aufhängungsorgan (30) mit dem mindestens einen Verankerungspunkt (28) verbunden ist;
wobei sich der mindestens eine Verankerungspunkt (28) an dem Verbindungsende (22) jeder der Verlängerungen (18) befindet;
**dadurch gekennzeichnet, dass** der starre hintere (24) und der verformbare vordere Teil (26) von konischer Form sind.

2. Strukturanordnung nach Anspruch 1, **dadurch gekennzeichnet, dass** der starre hintere (24) und der verformbare vordere Teil (26) jeweils eine Basis (38; 58) und einen Scheitel (40; 60) aufweisen, und dadurch, dass sie durch ihre Basis (38, 58) miteinander vereinigt sind.

3. Strukturanordnung nach Anspruch 2, **dadurch gekennzeichnet, dass** der starre hintere (24) und der verformbare vordere Teil (26) über eine ringförmige Platte (70) miteinander vereinigt sind, die sich zwischen ihren Basen erstreckt.

4. Strukturanordnung nach einem der Ansprüche 1 bis 3, **dadurch gekennzeichnet, dass** der starre hintere (24) und der verformbare vordere Teil (26) einen rechteckigen Querschnitt aufweisen.

5. Strukturanordnung nach einem der Ansprüche 1 bis 4, **dadurch gekennzeichnet, dass** der starre hintere (24) und der verformbare vordere Teil (26) hohl sind.

6. Strukturanordnung nach Anspruch 5, **dadurch gekennzeichnet, dass** der starre hintere (24) und der verformbare vordere Teil (26) durch Tiefziehen von Blechen hergestellt sind, die auf sich selbst geschlossen sind.

7. Strukturanordnung nach Anspruch 5 oder 6, **dadurch gekennzeichnet, dass** der verformbare vordere Teil (26) mehrere durchbrochene Stellen (68) aufweist.

8. Strukturanordnung nach einem der Ansprüche 1 bis 7, **dadurch gekennzeichnet, dass** die Verbindungsenden (22) der Verlängerungen (18) durch einen vorderen Querträger (31) miteinander verbunden sind.

9. Strukturanordnung nach einem der Ansprüche 1 bis 8, **dadurch gekennzeichnet, dass** der starre hintere Teil (24) jeder der Verlängerungen (18) mit dem Hilfsrahmen (20) lösbar verbunden ist.

## Claims

1. Front structural assembly (10) of a motor vehicle, comprising:
- a bulkhead (84) separating a passenger compartment (85) from an engine compartment (14) and two upper front longitudinal members (16) extending parallel to and at a distance from one another from said bulkhead (84) and through said engine compartment (14) in a direction opposite to said bulkhead;
- a cradle (20) extending transversely substantially vertically in line with said bulkhead (84);
- two extensions (18) extending respectively vertically in line with said two longitudinal members (16) from said cradle (20) up to a connecting end (22), each of said extensions comprising, on the one hand, a rigid rear part (24) connected to said cradle (20) and a deformable front part (26) extending up to said connecting end (22), and, on the other hand, at least one anchoring point (28) located at a distance from said cradle, said two extensions (18) being respectively suspended from said front longitudinal members (16) by two suspension members (30), each suspension member (30) being connected to said at least one anchoring point (28);
said at least one anchoring point (28) being located on said connecting end (22) of each of said extensions (18); **characterized in that** said rigid rear part (24) and deformable front part (26) have a conical shape.

2. Structural assembly according to Claim 1, **characterized in that** said rigid rear part (24) and deformable front part (26) respectively have a base (38; 58) and an apex (40; 60), and **in that** they are joined together by their base (38, 58).

3. Structural assembly according to Claim 2, **characterized in that** said rigid rear part (24) and deformable front part (26) are joined together via an annular plate (70) extended between their bases.

4. Structural assembly according to any one of Claims 1 to 3, **characterized in that** said rigid rear part (24) and deformable front part (26) have a rectangular cross section.

5. Structural assembly according to any one of Claims 1 to 4, **characterized in that** said rigid rear part (24) and deformable front part (26) are hollow.

6. Structural assembly according to Claim 5, **characterized in that** said rigid rear part (24) and deformable front part (26) are produced by stamping metal sheets closed on themselves.

7. Structural assembly according to Claim 5 or 6, **characterized in that** said deformable front part (26) has a plurality of apertures (68).

8. Structural assembly according to any one of Claims 1 to 7, **characterized in that** the connecting ends (22) of said extensions (18) are connected together by a front crossmember (31).

9. Structural assembly according to any one of Claims 1 to 8, **characterized in that** said rigid rear part (24) of each of said extensions (18) is connected to said cradle (20) in a removable manner.
